# EUROPEAN PATENT APPLICATION

(11) **EP 4 302 987 A1**
(43) Date of publication of application: **10.01.2024**
(21) Application number: 23183005.0
(22) Date of filing: 03.07.2023
(51) Int. Cl.: B32B 3/26, B29C 70/88, B32B 5/02, B32B 7/09, B32B 15/02, B64D 45/02

(54) **STRUCTURE WITH LIGHTNING-STRIKE PROTECTION LAYER**

(30) Priority: 07.07.2022 GB 202209951
(71) Applicant: Airbus Operations Limited, Bristol BS34 7PA (GB)
(72) Inventor: THOMPSON, Sam, Bristol, BS34 7PA (GB)
(74) Representative: Ribeiro, James Michael

(57) **Abstract**

A structure comprising: a laminate comprising layers of fibre-reinforced composite material; and a lightning-strike protection (LSP) layer. The LSP layer has an outer face and an inner face opposite to the outer face. A connector has an LSP connection surface which overlaps with, and is electrically connected to, the inner or outer face of the LSP layer. A bore passes through the LSP layer, the laminate and the connector. A fastener secures together the structure to a second structure. Therein the fastener is received in the bore and the connector electrically connects the LSP layer to the fastener.

## Description

### FIELD OF THE INVENTION

The present invention relates to a structure comprising: a laminate comprising layers of fibre-reinforced composite material; and a lightning-strike protection (LSP) layer.

### BACKGROUND OF THE INVENTION

Lightning strike protection (LSP) layers are used in composite aircraft structures to mitigate sparking and plasma arcing which may damage composite structures, as disclosed in EP0248122. When LSP layers are interrupted, for example by fasteners, it is difficult to ensure consistent and effective dissipation of electrical current.

### SUMMARY OF THE INVENTION

A first aspect of the invention provides a structure comprising: a laminate comprising layers of fibre-reinforced composite material; a lightning-strike protection (LSP) layer, the LSP layer comprising an outer face and an inner face opposite to the outer face; a connector comprising an LSP connection surface which overlaps with, and is electrically connected to, the inner or outer face of the LSP layer; and a bore which passes through the LSP layer, the laminate and the connector.

Optionally the LSP layer comprises or consists of a metallic material.

Optionally the connector comprises or consists of a metallic material.

Optionally the LSP layer is sandwiched between the laminate and the LSP connection surface. In this case LSP connection surface may be electrically connected to the outer face of the LSP.

Optionally the LSP layer deviates to form an indentation where it meets the connector.

Optionally the connector is sandwiched between the laminate and the LSP. In this case the LSP connection surface may be electrically connected to the inner face of the LSP.

Optionally the LSP layer comprises a hole bounded by an internal edge of the LSP layer, and the inner and outer faces of the LSP layer meet at the internal edge of the LSP layer.

Optionally the LSP connection surface is electrically connected to the inner or outer face of the LSP layer by a direct contact between the LSP connection surface and the inner or outer face of the LSP layer.

Optionally the LSP connection surface is adhered to the inner or outer face of the LSP layer by an adhesive.

Optionally the LSP connection surface is electrically connected to the inner or outer face of the LSP layer by an electrically conductive adhesive.

Optionally the LSP connection surface is substantially planar.

Optionally the connector is bonded in place, for instance by an adhesive between the LSP connection surface and the LSP layer, or by being embedded in the laminate.

Optionally the layers of the laminate are laid up in a stacking direction, and the LSP connection surface overlaps with the inner or outer face of the LSP layer when viewed in the stacking direction

Optionally the LSP layer comprises a foraminous sheet.

Optionally the connector comprises a washer with a hole bounded by an internal edge of the washer, an inner face, and an outer face, wherein the inner and outer faces of the washer meet at the internal edge of the washer, and wherein the LSP connection surface comprises all or part of one of the faces of the washer.

Optionally the fibre-reinforced composite material comprises electrically-conductive fibres embedded in an electrically-resistive matrix material.

Optionally the structure further comprises a glass fibre layer, wherein the LSP layer is sandwiched between the glass fibre layer and the laminate.

Optionally the LSP connection surface overlaps with, and is electrically connected to, the outer face of the LSP layer.

Optionally the LSP connection surface overlaps with, and is electrically connected to, the inner face of the LSP layer. For instance, the connector may be between the laminate and the LSP layer.

A second aspect of the invention provides an assembly comprising: a first structure according to the first aspect; a second structure; and a fastener which secures together the first and second structures, wherein the fastener is received in the bore and the connector electrically connects the LSP layer to the fastener.

Optionally the fastener comprises a fastener body; and a sleeve surrounding the fastener body, wherein the sleeve is formed from a more electrically conductive material than the fastener body and the connector electrically connects the LSP layer to the sleeve

Optionally the fastener comprises a metallic material.

Optionally the connector comprises a washer with a hole bounded by an internal edge of the washer, an inner face, and an outer face, wherein the inner and outer faces of the washer meet at the internal edge of the washer, the LSP connection surface comprises all or part of one of the faces of the washer, and the internal edge of the washer is electrically connected to the fastener.

A further aspect of the invention provides an aircraft comprising an assembly according to the second aspect.

A further aspect of the invention provides a method of manufacturing a structure according to the first aspect, the method comprising: laying up a laminate, the laminate comprising layers of fibre-reinforced composite material; laying up a lightning-strike protection (LSP) layer with the laminate, the LSP layer comprising an outer face and an inner face opposite to the outer face; in a curing stage, curing the fibre-reinforced composite material to form a cured laminate; after the curing stage, forming a bore which passes through the LSP layer and the cured laminate; and adhering a connector to the LSP layer, the connector comprising an LSP connection surface which overlaps with, and is electrically connected to, the inner or outer face of the LSP layer, wherein the bore passes through the connector.

A further aspect of the invention provides a method of manufacturing a structure according to the first aspect, the method comprising: in a lay-up stage, laying up a laminate with a lightning-strike protection (LSP) layer and a connector, the laminate comprising layers of fibre-reinforced composite material, the LSP layer comprising an outer face and an inner face opposite to the outer face, the connector comprising an LSP connection surface which overlaps with, and is electrically connected to, the inner or outer face of the LSP layer; in a curing stage, curing the fibre-reinforced composite material to form a cured laminate; and forming a bore which passes through the LSP layer, the cured laminate and the connector.

### BRIEF DESCRIPTION OF THE DRAWINGS

Embodiments of the invention will now be described with reference to the accompanying drawings, in which:
Figure 1 shows a cross-section of a laminate structure with a lightning strike protection layer;
Figure 2 shows a cross-section of an assembly with the laminate structure and lightning strike protection layer of Figure 1 and a second structure;
Figure 3 shows a cross-section of the assembly of Figure 2 with a bore passing through the assembly;
Figure 4 shows a cross-section of the assembly of Figure 3 with a connector;
Figure 5 shows a cross-section of the assembly of Figure 4 with a sleeve in the bore;
Figure 6 shows a cross-section of the assembly of Figure 5 with a fastener installed;
Figure 7 shows a plan view of the assembly of Figure 6;
Figure 8 shows a cross-section of another exemplary laminate structure, lightning strike protection layer and connector being laid up on a tool;
Figure 9 shows a cross-section of cured structure of Figure 8 after it has cured and been removed from the tool;
Figure 10 shows a cross-section of the structure shown in Figure 9 with a second structure and a bore passing through the assembly;
Figure 11 shows a cross-section of the assembly shown in Figure 10 with a fastener installed;
Figure 12 shows a cross-section of another exemplary assembly with a fastener installed;
Figure 13 shows a cross-section of another exemplary assembly with a fastener installed;
Figure 14 shows a cross-section of another exemplary assembly with a fastener installed;

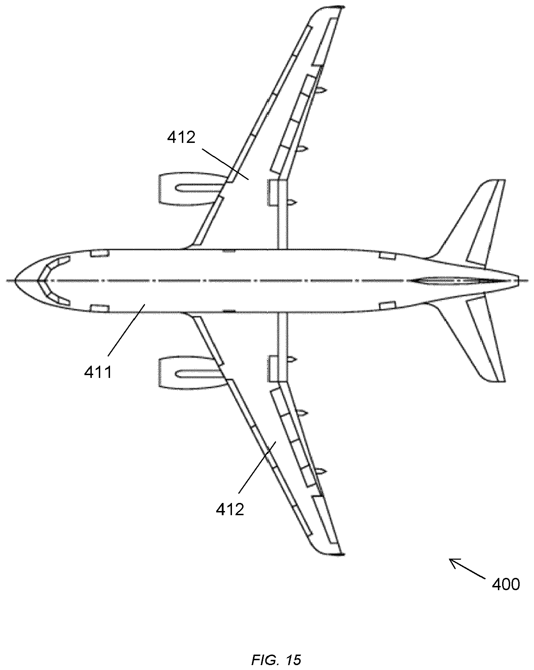

Figure 15 shows a plan view of an aircraft.

### DETAILED DESCRIPTION OF EMBODIMENT(S)

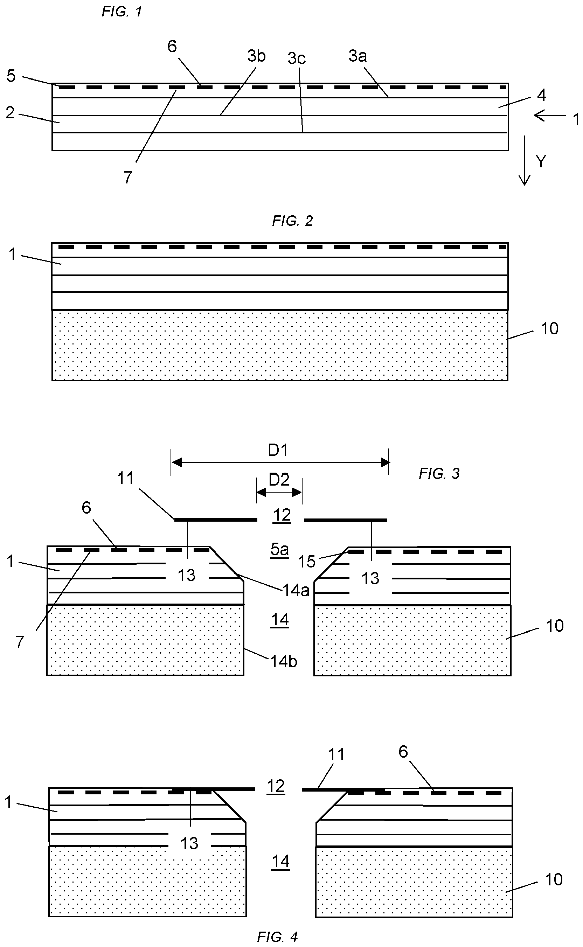

A first structure 1 comprising a laminate 2 and a lightning strike protection layer (LSP) 5 is shown in Figure 1. The laminate 2 comprises layers of fibre-reinforced composite material which are laid up in an uncured state, then cured to form a cured laminate. Each layer of fibre-reinforced composite material comprises a layer of electrically conductive fibres (in this case, unidirectional carbon fibres) impregnated with an electrically resistive matrix material - typically a polymer such as an epoxy resin. In this example only three carbon layers 3a, 3b and 3c are shown, with matrix material 4 between the carbon layers 3a, 3b, 3c. While only three carbon layers are shown, it will be understood that the laminate 2 may be formed from any number of layers of composite material.

The unidirectional carbon fibres provide high strength in the fibre direction. As shown in Figure 1, the carbon layers 3a, 3b, 3c are stacked in a stacking (or thickness) direction Y.

The laminate 2 may be formed in a lay-up stage by laying up the carbon layers 3a, 3b, 3c as dry fibre layers, or by laying up the carbon layers 3a, 3b, 3c as pre-pregs (fibre layers pre-impregnated with matrix material).

The dry fibre layers are laid up without any matrix material, and the matrix material is injected after the lay-up stage.

As the carbon layers 3a, 3b, 3c are embedded in a matrix material 4, the carbon fibres do not have direct contact with the carbon fibres in the adjacent layers. This results in poor electrical conductivity in the stacking or thickness direction Y of the laminate 2. Alternatively, the layers 3a, 3b, 3c may be glass fibre layers, with even lower electrical conductivity.

The LSP layer 5 is laid up with the laminate 2. In a curing stage, the fibre-reinforced composite material is cured to form a cured laminate. During the curing stage the LSP layer 5 becomes embedded in the matrix material 4 as shown in Figure 1, with a thin surface layer of matrix material on the outer surface of the first structure 1 (which is the upper surface in the view of Figure 1).

The LSP layer 5 has an outer face 6 and an inner face 7 opposite the outer face 6. The inner face 7 of the LSP layer 5 is closer to the laminate 2 than the outer face 6.

The LSP layer 5 may comprise or consist of a metallic material, or any other highly conductive material. The LSP layer 5 therefore has a higher electrical conductivity than the matrix material 4. The LSP layer 5 acts as a conductor to dissipate electrical current over the structure 1.

The LSP layer 5 may be a foraminous sheet as shown in Figure 1, i.e. porous and/or perforated with small holes. A foraminous LSP layer is more lightweight and cheaper than a continuous sheet of metal. Alternatively, the LSP layer 5 may be formed as a continuous piece of material, such as a metal foil.

The LSP layer 5 may comprise or consist of a metallic material, such as aluminium, copper or bronze. Preferably, the LSP layer 5 comprises or consists of copper or bronze, which provide resistance to galvanic corrosion.

Optionally the LSP layer 5 comprises or consists of a bronze mesh or an expanded copper foil.

A process of assembling a lightning strike protection assembly 8 is shown in Figures 2-6. After the curing stage, the cured first structure 1 is arranged with a second structure 10 as in Figure 2. The second structure 10 may be made of any material, such as a metal or a composite material.

A countersunk bore 14 is then drilled through the first structure 1 (including the laminate 2 and the LSP layer 5) and through the second structure 10 as shown in Figure 3. The bore 14 comprises a substantially cylindrical portion 14b and a frustoconical countersink portion 14a.

The drill removes part of the LSP layer 5 to leave a hole 5a bounded by an internal edge 15 of the LSP layer 5. Therefore the bore 14 extends through the LSP layer 5 as well as through the laminate 2 and the second structure 10. The inner face 7 and the outer face 6 of the LSP layer 5 meet at the internal edge 15 of the LSP layer 5.

Optionally the internal edge 15 of the LSP layer 5 may be discontinuous (i.e. not a continuous circle) particularly if the LSP layer 5 is formed as a foraminous sheet such as a mesh or lattice. The internal edge 15 may also be frayed and/or torn by the drilling process.

After the bore 14 has been formed, a connector 11 shown in Figure 3 is fitted. The underside of the connector 11 provides a lightning strike protection (LSP) connection surface 13.

The connector 11 comprises or consists of a metallic material such as brass or copper foil. The connector 11 is disc shaped with an outer diameter D1, and an inner diameter D2 where a hole 12 is pre-formed in the connector 11. The inner diameter D2 of the connector 11 is smaller than the diameter of the bore 14. Preferably, the hole 12 and the bore 14 are concentric.

Alternatively, the connector 11 may be fitted as a solid disc with no hole.

The connector 11 may be foraminous (i.e. porous and/or perforated with small holes) or it may have a continuous non-perforated structure.

Before fitting the connector 11, part of the surface layer of matrix material is removed by abrasion to expose part of the outer face 6 of the LSP layer 5.

Optionally an adhesive is then applied to the LSP connection surface 13 and/or to the exposed part of the outer face 6 of the LSP layer 5 to adhere the LSP connection surface 13 to the exposed part of the outer face 6 of the LSP layer 5.

If the adhesive is electrically conductive then it may cover the entire area of overlap between the LSP connection surface 13 and the exposed part of the outer face 6 of the LSP layer 5. If the adhesive is not electrically conductive, then it may be applied in small patches so that the LSP connection surface 13 and the exposed part of the outer face 6 of the LSP layer are in direct contact between the patches of adhesive. After the adhesive is applied, it is cured with a heat lamp or heat pad (not shown).

As shown in Figure 4, after the connector 11 has been fitted, the LSP connection surface 13 overlaps with, and is electrically connected to, the exposed outer face 6 of the LSP layer. The LSP connection surface 13 provides a large electrical contact area between the connector 11 and the LSP layer 5.

The thickness of the connector 11 is chosen such that its outer surface lies flush with the surface of the structure 1.

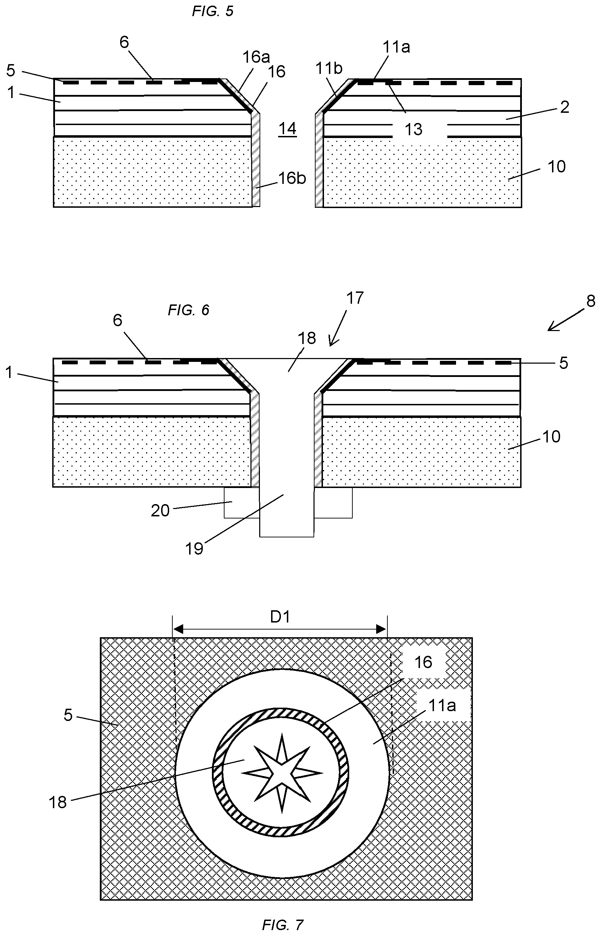

Next, a sleeve 16 is installed into the bore 14 as shown in Figure 5. The sleeve 16 has a substantially cylindrical portion 16b and a frustoconical portion 16a. The sleeve 16 is preferably dimensioned to fit within the bore 14 with an interference fit.

As the sleeve 16 is pushed into the bore 14, the connector 11 is deformed by the sleeve 16 to form a frustoconical portion 11b. The connector 11 is preferably a foil of a malleable metallic material which is sufficiently thin to deform easily.

The connector 11 may also comprise darts, slits or areas of pre-determined weakness that enable it to deform without tearing or wrinkling.

After deformation, a planar disc portion 11a of the connector 11 is left undeformed and bonded to the LSP layer 5. The underside of the planar disc portion 11a provides the LSP connection surface 13.

The bore 14 passes through the first structure 1 (including the laminate 2 and the LSP layer 5), through the connector 11 and through the second structure 10. In this example, the LSP layer 5 is sandwiched between the laminate 2 and the LSP connection surface 13.

Preferably the connector 111 is bonded in place by an adhesive between the connector 111 and the LSP layer 5. Alternatively, rather than being bonded in place the connector 111 may be secured to the structure by the sleeve 16.

The sleeve 16 is preferably made of a metallic material, such as aluminium, copper or bronze. Preferably, copper or bronze is used to avoid galvanic corrosion.

The frustoconical portion 16a of the sleeve 16 is in direct contact with the frustoconical portion 11b of the connector, so the connector 11 electrically connects the LSP layer 5 to the sleeve 16.

Figure 6 shows a lightning strike protection assembly 8 with a fastener 17 installed. The fastener 17 comprises the sleeve 16, a fastener body (in this case a bolt with a head 18 and a tail 19), and a nut 20 screwed onto the tail 19 of the bolt.

Optionally the bolt is installed with an electrically conductive bonding paste between the bolt and the sleeve 16.

Alternatively, a blind fastener may be used which does not require access to the internal (bottom) side of the second structure 10.

In this example the sleeve 16 is installed in the bore 14 before the bolt, but in an alternative embodiment the sleeve 16 may be carried by the bolt so they are installed in the bore 14 at the same time.

The bolt is preferably made of an electrically conductive metallic material, such as stainless steel or titanium. The sleeve 16 may be formed from a more electrically conductive material than the bolt.

The connector 11 contacts the LSP layer 5 via the LSP connection surface 13 over a large and continuous planar area of overlap. Similarly, the connector 11 contacts the sleeve 16 via the frustoconical portion 11b over a large and continuous frustoconical area. The connector 11 therefore bridges any gaps between the internal edge 15 of the LSP layer 5 and the sleeve 16. This arrangement prevents sparking between the LSP layer 5 and the fastener 17 which could damage the laminate 2 by delamination or blistering. It also prevents damage to the fastener 17 caused by sparking. The connector 11 therefore improves the longevity and structural integrity of the laminate 2 in the event of lightning strike.

Optionally the sleeve 16 may be omitted so that the connector 11 directly contacts the head 18 of the bolt. In this case the frustoconical portion 11b of the connector 11 will be formed when the bolt is pushed into the bore 14.

Figure 7 shows a plan view of the assembly 8 of Figure 6, viewed in the thickness or stacking direction Y. The LSP connection surface 13 (which is the underside of the disc portion 11a shown in Figure 7) overlaps with the LSP layer 5 when viewed in the stacking direction.

Optionally the first structure 1 is covered by a protective glass fibre layer (not shown) which is locally trimmed back to expose the LSP layer 5 before the connector 11 is installed.

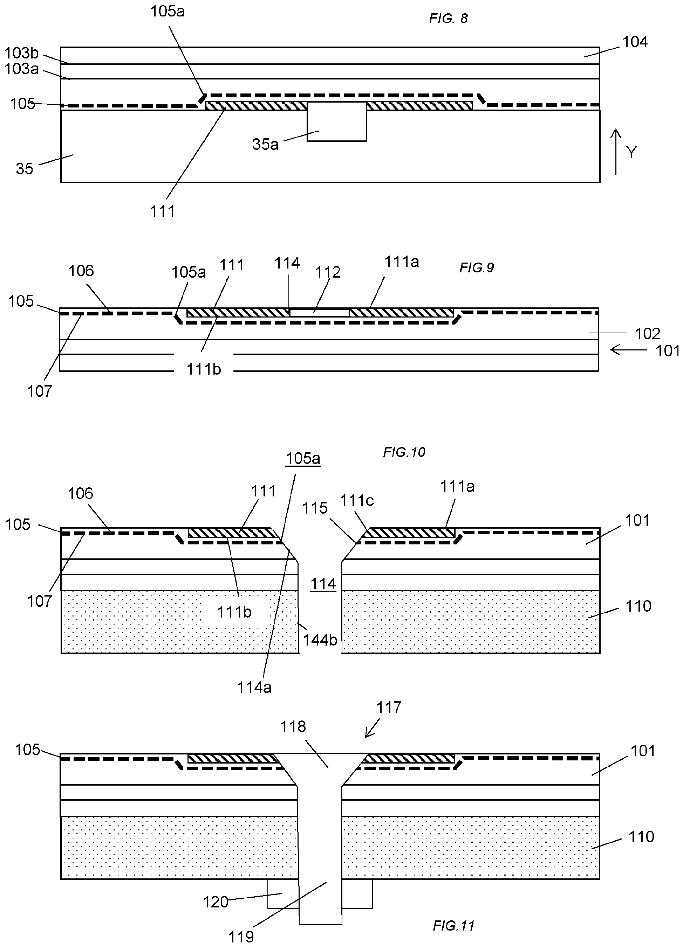

A method of assembling a lightning strike protection assembly and forming a first structure 101 according to a further embodiment of the invention is shown in Figures 8-11. Equivalent elements to Figures 1-7 are given the same reference number, incremented by 100.

The first structure 101 shown in Figure 9 comprises a laminate 102, which is a cured structure that comprises layers of fibre-reinforced composite material, similar to laminate 2, including carbon layers 103a,b and matrix material 104.

A tool 35 with a protruding dowel 35a is provided as shown in Figure 8. A connector 111 is fitted on the dowel 35a, then an LSP layer 105 is laid up on the tool 35 in contact with the connector 111. The connector 111 comprises or consists of a conductive metallic material such as brass or copper. The connector 111 is referred to below as a washer 111. The washer 111 is pre-formed with a hole 112.

Next, carbon layers 103a, 103b, etc. are laid up on top of the LSP layer 105 as shown in Figure 8. The carbon layers may be laid up as dry fibre or pre-preg.

The layup of Figure 8 is then cured to form a cured first structure 101 shown in Figure 9. The cured matrix material 104 bonds the washer 111 in place but there may be little or no matrix material 104 between the washer 111 and the LSP layer 105. Hence the washer 111 may be electrically connected to an outer face 106 of the LSP layer by a direct contact between the washer 111 and the outer face 106 of the LSP layer.

As shown in Figure 9, the LSP layer 105 deviates to form an indentation 105a where it meets the washer 111. The LSP layer 105 has an inner face 107 opposite the outer face 106.

The first structure 101 is then arranged with a second structure 110 as shown in in Figure 10, and a bore 114 drilled through the structures 101, 110.

The bore 114 extends through the washer 111, the LSP layer 105, the first structure 101 and the second structure 110.

The drilling process removes part of the internal edge of the washer 111, leaving a frustoconical internal edge 111c. An inner face 111b of the washer meets an outer face 111a of the washer at the internal edge 111c.

The bore 114 extends through the LSP layer 105 to form a hole bounded by an internal edge 115 of the LSP layer 105. An inner face 107 and an outer face 106 of the LSP layer 105 meet at the internal edge 115.

A fastener 117 is then installed as shown in Figure 11. The fastener 117 comprises a fastener body (in this case a bolt with a head 118 and a tail 119), and a nut 120 screwed onto the tail 119 of the bolt.

Alternatively, a blind fastener may be used which does not require access to the internal (bottom) side of the second structure 110.

The bolt is preferably made of electrically conductive metallic material, such as stainless steel or titanium.

The washer 111 is electrically connected to the LSP layer 105 through its inner face 111b, which in this case provides an LSP connection surface equivalent to the LSP connection surface 13 of the previous embodiment. The inner face 11 1b of the washer directly contacts the outer face 106 of the LSP layer 105. In the event of a lightning strike, electrical current therefore flows across the structure 101 through the LSP layer 105, to the fastener 117 via the washer 111.

The washer 111 contacts the LSP layer 105 via the LSP connection surface (i.e. its inner face 111b) which overlaps with, and is electrically connected to, the outer face 106 of the LSP layer 105.

The frustoconical internal edge 115 of the washer 111 is electrically connected to the fastener, via direct contact with the frustonical head 118 of the bolt, providing an electrical connection between the washer 111 and the bolt. The internal edge 115 of the LSP 105 may also be in contact with the head 118 of the bolt. Compared with the discontinuous and/or frayed internal edge 115 of the LSP 105, the relatively thick frustoconical internal edge 115 of the washer 111 provides a larger and more continuous contact area with the bolt, which is therefore less prone to sparking.

In this example the cured matrix material 104 bonds the washer 111 in place, but in an alternative, rather than being bonded in place the washer 111 may be clamped against the LSP layer 105 by the head 118 of the fastener.

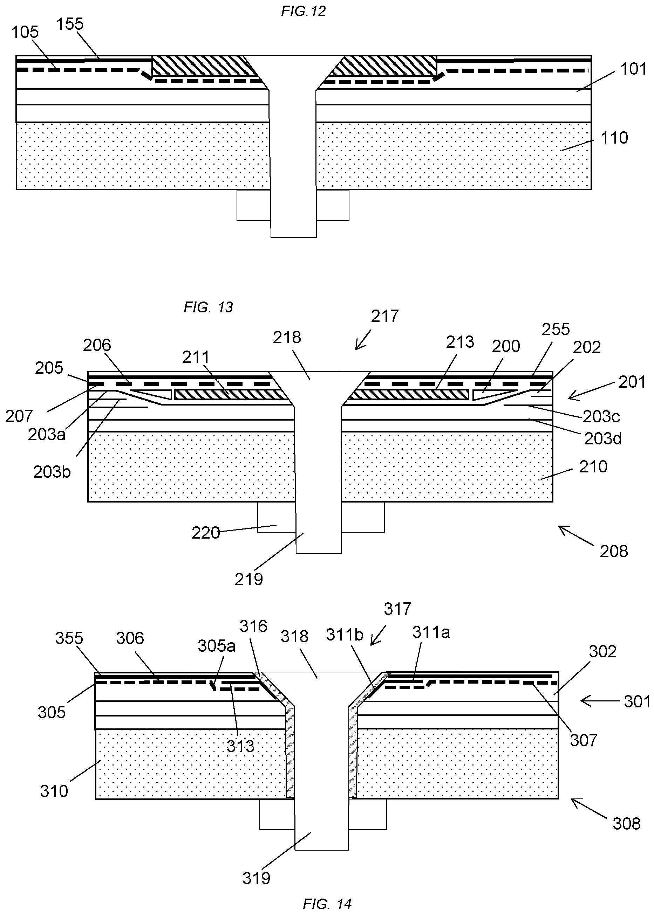

Figure 12 shows an alternative embodiment, where the first structure 101 is covered by a protective glass fibre layer 155. The glass fibre layer 155 protects the structure 101 and helps prevent micro-cracking of the LSP layer 105 and the laminate. In all other respects, the embodiment of Figure 12 is the same as the embodiment of Figure 11.

The glass fibre layer 155 may be trimmed away to enable the washer 111 to be fitted.

A lightning strike protection assembly 208 and structure 201 according to a further embodiment of the invention is shown in Figure 13. Equivalent elements to Figures 1-7 are given the same reference number, incremented by 200.

Figure 13 shows a first structure 201 secured to a second structure 210 with a fastener 217. The first structure comprises a glass fibre layer 255 that covers an LSP layer 205. The LSP layer has an outer face 206 opposite an inner face 207. A washer 211 has an LSP connection surface 213 that overlaps, and is in electrical contact with, the inner face 207 of the LSP layer 205. In this example, the washer 211 is sandwiched between the laminate 202 and the LSP layer 205.

The laminate 202 comprises carbon fibre reinforced polymer (CFRP) layers including carbon layers 203a-203d. The washer 211 is bonded in place by being embedded in the laminate 205, under the LSP layer 205 and the glass fibre layer 255.

The manufacturing process of the laminate 102 (i.e. the lay-up and curing process) is modified to avoid stress concentrations that may arise around the periphery of the washer 211. As shown, a conical preform 200 is fitted around the washer 211. The preform 200 is formed of plies of fibre-reinforced composite material, which may be the same composite material as the rest of the laminate 202. The preform 200 may be laid up in a cured or uncured state.

This allows the outermost carbon layer 203a to be laid up with a gently angled ramp where it meets the preform 200. As a result the likelihood of the laminate 202 being damaged by stress concentrations is reduced.

The next carbon layers 203b, 203c are dropped off as shown. The layers 203b and 203c extend to the layer 203a before being terminated in the lay-up. The next layers 203d etc. then extend continuously.

A lightning strike protection assembly 308 and structure 301 according to a further embodiment of the invention is shown in Figure 14. Equivalent elements to Figures 1-7 are given the same reference number, incremented by 300.

A glass fibre protective cover 355 covers a first structure 301 (comprising a laminate 302 and an LSP layer 305), a connector 311a/311b and a second structure 310. A fastener 317 with a head 318, tail 319 and sleeve 316 secures the first structure 301 to the second structure 310.

As in the previous embodiments, the LSP layer 305 has an outer face 306 and an inner face 307. The outer face 306 of the LSP layer 305 overlaps a LSP connection surface 313 of the connector. The LSP layer 305 is similar to the LSP layer 105 shown in Figure 12. The LSP layer 305 deviates to form an indentation 305a where it meets the connector 311a/311b.

The connector 311a/311b in Figure 14 is similar to the connector 11a/11b described in Figure 5, and is formed in a similar manner.

The connector comprises a substantially planar portion 311a and a frustoconical portion 311b. The LSP connection surface 313 is the underside of the substantially planar portion 313a. The frustoconical portion 311b of the connector is in direct contact with the sleeve 316. The sleeve 316 may be omitted so that the connector directly contacts the head 318 of the bolt.

As shown in Figure 14, the LSP layer 305 is sandwiched between the laminate 302 and the planar portion 311a of the connector (in other words, the LSP layer 305 is between the laminate 302 and the connector). The LSP connection surface 313 may be adhered to the outer face 306 of the LSP layer 305, or there may be direct contact between the LSP connection surface 313 and the outer face 306 of the LSP layer 305. The connector may be bonded in place by being embedded within the structure 301, under the glass fibre layer 355.

In the examples given above, the connector is installed during manufacture of the first structure, but in alternative embodiments the connector may installed as a modification after manufacture, for instance as part of a repair.

In the examples above the head of the fastener is a frustoconical countersink head, but in other embodiments the head of the fastener may be cylindrical (top hat).

The lightning strike protection assemblies described above may be used in a number of applications, for example in a wind turbine blade or in an aircraft.

An aircraft 400 shown in Figure 14 comprises a fuselage 411 and a pair of wings 412. The structure 1, 101, 201, 301 may be a wing skin panel which forms part of the upper or lower surface of a wing 412, or a fuselage skin panel which forms part of the fuselage 411. In either case, the outer surface of the assembly is exposed to the flow of air during flight so must be aerodynamically smooth. Hence the head 18, 118, 218, 318 of the fastener may be flush with the outer surface of the structure to minimize aerodynamic drag. Also, the outer surface of the structure (including the head of the fastener) may be covered by a surface layer of paint, and/or other protective layers.

Optionally the structure 1, 101, 201, 301 may form a wall of an aircraft fuel tank.

The LSP layer 5, 105, 205, 305 is positioned closer to an outer surface of the first structure 1, 101, 201, 301 than to an inner surface of the first structure 1, 101, 201, 301, the outer surface being exposed to the risk of lightning strike.

The second structure 10, 110, 210, 310 may be an internal structural component of the aircraft 400, such as a wing rib, a wing spar, a stringer or a fuselage frame.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. A structure comprising: a laminate comprising layers of fibre-reinforced composite material; a lightning-strike protection (LSP) layer, the LSP layer comprising an outer face and an inner face opposite to the outer face; a connector comprising an LSP connection surface which overlaps with, and is electrically connected to, the inner or outer face of the LSP layer; and a bore which passes through the LSP layer, the laminate and the connector.

2. A structure according to any preceding claim, wherein the LSP layer deviates to form an indentation where it meets the connector.

3. A structure according to any preceding claim, wherein the connector is sandwiched between the laminate and the LSP layer.

4. A structure according to any preceding claim, wherein the LSP connection surface is electrically connected to the inner or outer face of the LSP layer by a direct contact between the LSP connection surface and the inner or outer face of the LSP layer.

5. A structure according to any preceding claim, wherein the LSP connection surface is adhered to the inner or outer face of the LSP layer by an adhesive.

6. A structure according to any preceding claim, wherein the LSP connection surface is electrically connected to the inner or outer face of the LSP layer by an electrically conductive adhesive.

7. A structure according to any preceding claim, wherein the LSP connection surface is substantially planar.

8. A structure according to any preceding claim, wherein the connector comprises a washer with a hole bounded by an internal edge of the washer, an inner face, and an outer face, wherein the inner and outer faces of the washer meet at the internal edge of the washer, and wherein the LSP connection surface comprises all or part of one of the faces of the washer.

9. A structure according to any preceding claim, wherein the LSP connection surface overlaps with, and is electrically connected to, the inner face of the LSP layer.

10. An assembly comprising: a first structure according to any preceding claim; a second structure; and a fastener which secures together the first and second structures, wherein the fastener is received in the bore and the connector electrically connects the LSP layer to the fastener.

11. An assembly according to claim 10, wherein the fastener comprises a fastener body; and a sleeve surrounding the fastener body, wherein the sleeve is formed from a more electrically conductive material than the fastener body and the connector electrically connects the LSP layer to the sleeve.

12. An assembly according to claim 10 or 11, wherein the connector comprises a washer with a hole bounded by an internal edge of the washer, an inner face, and an outer face, wherein the inner and outer faces of the washer meet at the internal edge of the washer, the LSP connection surface comprises all or part of one of the faces of the washer, and the internal edge of the washer is electrically connected to the fastener.

13. An aircraft comprising an assembly according to any of claims 10 to 12.

14. A method of manufacturing a structure according to claim 1, the method comprising: laying up a laminate, the laminate comprising layers of fibre-reinforced composite material; laying up a lightning-strike protection (LSP) layer with the laminate, the LSP layer comprising an outer face and an inner face opposite to the outer face; in a curing stage, curing the fibre-reinforced composite material to form a cured laminate; after the curing stage, forming a bore which passes through the LSP layer and the cured laminate; and adhering a connector to the LSP layer, the connector comprising an LSP connection surface which overlaps with, and is electrically connected to, the inner or outer face of the LSP layer, wherein the bore passes through the connector.

15. A method of manufacturing a structure according to claim 1, the method comprising: in a lay-up stage, laying up a laminate with a lightning-strike protection (LSP) layer and a connector, the laminate comprising layers of fibre-reinforced composite material, the LSP layer comprising an outer face and an inner face opposite to the outer face, the connector comprising an LSP connection surface which overlaps with, and is electrically connected to, the inner or outer face of the LSP layer; in a curing stage, curing the fibre-reinforced composite material to form a cured laminate; and forming a bore which passes through the LSP layer, the cured laminate and the connector.
